# EUROPÄISCHE PATENTSCHRIFT

(11) **EP 3 741 597 B1**
(45) Veröffentlichungstag und Bekanntmachung des Hinweises auf die Patenterteilung: **11.10.2023**
(21) Anmeldenummer: 20160692.8
(22) Anmeldetag: 03.03.2020
(51) Int. Cl.: B60J 5/10

(54) **MODULARE HECKBAUGRUPPE FÜR EIN KRAFTFAHRZEUG**
MODULAR REAR ASSEMBLY FOR A MOTOR VEHICLE
MODULE DE COFFRE MODULAIRE POUR UN VÉHICULE AUTOMOBILE

(30) Priorität: 21.05.2019 DE 102019207398
(43) Veröffentlichungstag der Anmeldung: 25.11.2020
(73) Patentinhaber: Ford Global Technologies, LLC, Dearborn, MI 48126 (US)
(72) Erfinder: Lichter, Martin, 50374 Erftstadt (DE); Weber, Hauke, 50859 Köln (DE); Lopes dos Santos, Armando, 50737 Köln (DE); Breuer, Simone, 40764 Langenfeld (DE); Sreepathy, Raja Raghava, 51371 Leverkusen (DE)
(74) Vertreter: Dörfler, Thomas

(56) Entgegenhaltungen:
- EP-A1- 1 930 196
- WO-A1-2005/042287
- DE-B3-102018 101 678
- DE-U1- 20 301 275
- US-A- 2 796 287
- US-A- 5 137 413
- US-A1- 2006 152 029
- US-A1- 2006 220 410
- US-A1- 2009 243 342

## Beschreibung

Die vorliegende Erfindung betrifft eine modulare Heckbaugruppe für ein Kraftfahrzeug, umfassend ein heckseitiges Rahmenelement und eine Heckklappe, wobei das Rahmenelement dazu eingerichtet ist, einen Teil eines heckseitigen Fahrzeugrahmens auszubilden und lösbar an dem Fahrzeugrahmen befestigt zu werden. Weiter betrifft die Erfindung ein Kraftfahrzeug, welches ein erfindungsgemäßes Heckbaugruppe aufweist. Eine modulare Heckbaugruppe mit den eingangs genannten Merkmalen ist aus dem Stand der Technik, insbesondere der WO 2005/042287 A1, bereits bekannt.

Im Allgemeinen weisen Kraftfahrzeuge auf Ihrer Heckseite eine Ladeöffnung auf, über welche Ladegut in einen Kofferraumbereich des Kraftfahrzeugs ein- und ausgeladen werden kann. Die Ladeöffnung kann sich nahezu über den gesamten Bereich des Fahrzeughecks erstrecken und mit einer Heckklappe verschlossen werden. Um eine solche Heckklappe von einer Schließstellung in eine Öffnungsstellung zu bewegen und umgekehrt, kann die Heckklappe schwenkbar am Fahrzeug gelagert sein. Weiterhin kann zwischen der Heckklappe und dem Heckbereich des Kraftfahrzeugs ein Verriegelungsmechanismus ausgebildet sein, vermöge dessen die Heckklappe sicher arretiert und verschlossen werden kann. Dazu ist in der Regel sowohl an der Heckklappe als auch der Fahrzeugkarosserie ein entsprechendes Verriegelungselement vorgesehen, wobei beide Verriegelungselemente in der Schließstellung der Heckklappe zusammenwirken und den Verschlussmechanismus bereitstellen. Heckklappen können grundsätzlich einteilig oder mehrteilig ausgebildet sein.

Viele Fahrzeugtypen weisen in ihrem Heckbereich einen über die Hecköffnung zugänglichen Kofferraum auf. Der Kofferraumboden ist dabei in der Regel auf einem höheren Vertikalniveau angeordnet als der Fahrzeugunterboden. Häufig ist zwischen dem die eigentliche Ladefläche bereitstellenden Kofferraumboden und dem Fahrzeugunterboden ein zusätzlicher Stauraum vorgesehen, beispielsweise zur Lagerung eines Ersatzreifens. Selbst in jenem Fall, dass in dem zwischen Fahrzeugunterboden und Kofferraumboden vorgesehenen Zwischenraum kein Ersatzreifen gelagert wird, und der Zwischenraum somit prinzipiell zur Lagerung von Ladegut zur Verfügung steht, ist die Verwendung dieses zusätzlichen Raumgewinns als Stauraum bei alltäglichen Be- und Entladevorgängen eher ungeeignet, dies gilt umso mehr für schwerere Lasten. Begründet ist dies darin, dass der zwischen Fahrzeugunterboden und Kofferraumboden liegende Zwischenraum im Fahrzeugheckbereich von einer positionsfesten Stoßstange und/oder einer Fahrzeugverkleidung begrenzt wird. Dies bedeutet, dass eine Last (beispielsweise ein Gepäckstück) zur Positionierung in dem Zwischenraum über die Stoßstange bzw. die Fahrzeugverkleidung befördert (z.B. gehoben) werden muss, um auf das in Bezug auf die Oberseite der Stoßstange niedrigere Vertikalniveau des Zwischenraums zu gelangen. Dies erscheint insbesondere für Gepäckstücke von höherem Gewicht unpraktikabel, weshalb der unter dem Kofferraumboden liegende Stauraum in der Regel nicht für routinemäßige Be- und Entladevorgänge des Kraftfahrzeugs genutzt wird.

Die standardmäßig im Heckbereich von Fahrzeugen verbaute Stoßstange bzw. der untere Teil der die Hecköffnung umgebenden Karosserie ist in der Regel einteilig in einen die Fahrzeughecköffnung begrenzenden Heckrahmen integriert und ist somit unmittelbar der Fahrzeugkarosserie zuzuordnen.

Unter dieser Prämisse liegt der vorliegenden Erfindung die Aufgabe zugrunde, eine modulare Heckbaugruppe für ein Kraftfahrzeug bereitzustellen, mit welcher das heckseitige Beladen eines Kraftfahrzeugs komfortabler und schneller durchgeführt werden kann und der zum Beladen eines Kraftfahrzeugs zugängliche Stauraum vergrößert wird. Ferner liegt der Erfindung die Aufgabe zugrunde ein Kraftfahrzeug bereitzustellen, bei welchem das heckseitige Beladen eines Kraftfahrzeugs komfortabler und schneller durchgeführt werden kann und der zum Beladen des Kraftfahrzeugs zugängliche Stauraum vergrößert wird.

Die genannte Aufgabe wird erfindungsgemäß durch eine modulare Heckbaugruppe gemäß dem Patentanspruch 1, sowie durch ein Kraftfahrzeug gemäß dem Patentanspruch 10 gelöst.

Erfindungsgemäß vorgeschlagen wird eine modulare Heckbaugruppe für ein Kraftfahrzeug. Diese umfasst zunächst ein heckseitiges Rahmenelement und eine Heckklappe. Dabei ist das Rahmenelement dazu eingerichtet, einen Teil eines heckseitigen Fahrzeugrahmens auszubilden und lösbar an dem Fahrzeugrahmen befestigt zu werden. Die Erfindung zeichnet sich dadurch aus, dass die Heckklappe dazu eingerichtet ist, im Wege einer kombinierten Translations- und Schwenkbewegung geöffnet zu werden. Dies meint, dass die Heckklappe vor dem eigentlichen Abschwenken zunächst eine translatorische Schiebebewegung erfährt, beispielsweise eine Vertikalbewegung. Erst danach erfolgt die eigentliche eine Abschwenkbewegung. Dies kann beispielsweise über einen Mehrgelenk-Mechanismus bereitgestellt werden.

Grundsätzlich kann die modulare Heckbaugruppe in Fahrzeugen mit unterschiedlichen Heckformen verbaut werden, unabhängig davon, ob es sich um ein Stufenheck, Schrägheck oder ein Steilheck handelt. Die Form des Hecks hängt von dem jeweiligen Fahrzeugtyp ab.

Stufenhecks sind in den meisten Kraftfahrzeugen oberhalb der Kompaktklasse anzutreffen. Bei Kraftfahrzeugen mit einem solchen Stufenheck ist der Kofferraum klar von der Fahrgastzelle abgesetzt und bildet eine Stufe hin zum Fahrzeugdach. Ein Schott oder eine Kreuzverstrebung unter den C-Säulen versteift die selbsttragende Karosserie. Bei Fahrzeugen mit Stufenheck spricht man unter anderem von einem Drei-Box-Design, bei dem Bug, Fahrgastzelle und Heck jeweils einem Kasten ähneln.

In SUV-Fahrzeugen ist in der Regel ein Schrägheck vorgesehen. Bei einem Schrägheck fällt das Heck unmittelbar hinter der ersten oder zweiten Sitzreihe des Fahrgastraums mit annähernd konstantem Gefälle vom Dach bis zum hinteren Abschluss der Karosserie ab. Im Gegensatz dazu weisen Steilhecks eine nahezu senkrecht verlaufende Heckfläche auf.

Die Fahrzeugkarosserie (die synonym auch als Fahrzeugrahmen bezeichnet werden kann) muss grundsätzlich eine Mindeststeifheit aufweisen, um die Fahrzeuginsassen im Crash-Fall zu schützen. Weiterhin muss die Fahrzeugkarosserie geeignet sein, um die Schwingungen des Fahrzeugmotors abzuleiten, um Komfortbeeinträchtigungen in der Fahrgastzelle zu minimieren. Vollständig geschlossene bzw. einteilig gefertigte Fahrzeugkarosserien mit möglichst runden Profilen weisen dabei besonders hohe Steifigkeitswerte auf. Bezogen auf den Fahrzeugheckbereich ist es aus dem Stand der Technik bekannt, insbesondere bei Kraftfahrzeugen mit einem Schrägheck oder Steilheck, einen heckseitigen Fahrzeugrahmen vorzusehen, der eine mit einer Heckklappe verschließbare Ladeöffnung beziehungsweise Kofferraumöffnung begrenzt. In der Regel ist ein solch heckseitiger Fahrzeugrahmen einteilig gefertigt und bildet einen Teil der der Fahrzeugkarosserie.

Gleichzeitig definiert ein solcher Fahrzeugrahmen mit seiner unteren Rahmenseite die ungefähre Vertikalposition des Kofferraumbodens. Unterhalb des Kofferraumbodens ist bei vielen Fahrzeugen ein zusätzlicher Stauraum (beispielsweise für ein Ersatzrad, Verbandszeug, Fahrzeugwerkzeug etc.) vorgesehen. Der Stauraum ist also in einem Zwischenraum zwischen dem Kofferraumboden und Fahrzeugunterboden angeordnet. Aufgrund des in Vertikalrichtung höheren Vertikalniveaus der unteren Rahmenseite, ist der Zwischenraum zum Laden schwerer Gepäckstücke in der Regel ungeeignet. Denn zum Be- oder Entladen eines Gepäckstücks in den genannten Zwischenraum, muss das Gepäckstück über die untere Rahmenseite des heckseitigen Fahrzeugrahmens hinweg gehoben werden, was für eine das Gepäckstück ein- oder ausladende Person mit aus einer solchen Hebebewegung entstehenden Risiken für die Gesundheit (insbesondere den Rücken) verbunden ist. Weiterhin ist die Ausführung einer solchen Hebebewegung unkomfortabel. Für schwere oder unhandliche Lasten erscheint es, aufgrund der auszuführenden Hebebewegung über die untere Rahmenseite hinweg, gar unmöglich diese in den Zwischenraum ein- oder auszuladen. Diesem Problem wird mit der vorliegenden Erfindung Abhilfe geschaffen.

Wie bereits erwähnt, umfasst die erfindungsgemäße modulare Heckbaugruppe ein heckseitiges Rahmenelement, welches einen Teil des heckseitigen Fahrzeugrahmens ausbildet und lösbar an dem Fahrzeugrahmen befestigt werden kann. In Bezug zum Stand der Technik, wird der einteilige, heckseitige Fahrzeugrahmen mit der Erfindung dahingehend abgeändert, dass die untere Rahmenseite durch ein separates Rahmenelement ersetzt wird, welches über geeignete Verbindungselemente (beispielsweise Schraubverbindungen) mit dem heckseitigen Fahrzeugrahmen verbunden werden kann.

Bei entsprechender Ausgestaltung ermöglicht das genannte Rahmenelement eine einfache Zugänglichkeit eines in Bezug auf das Vertikalniveau unterhalb des Kofferraumbodens liegenden Zwischenraums beim Be- oder Entladen. Die aus dem Stand der Technik bekannte untere Seite des heckseitigen Fahrzeugrahmens kann also abgesenkt werden. Dabei ist zu beachten, dass die Mindeststeifigkeit des Fahrzeugrahmens beibehalten wird. Dies ist bei der Auslegung bzw. Entwicklung des Fahrzeugs zu berücksichtigen. Ferner kann durch die modulare Bauweise auf die individuellen Kundenwünsche eingegangen werden. Durch die lösbare Verbindbarkeit des unteren Rahmenelements mit dem heckseitigen Fahrzeugrahmen wird ferner ein Austausch des Rahmenelements im Falle einer Beschädigung (beispielsweise in Folge eines Crashs) erleichtert. Die Heckklappe als Teil der modularen Heckbaugruppe kann als alleinige die Hecköffnung verschließende Heckklappe ausgestaltet sein. Insbesondere ist unter einer Heckklappe im Sinne der Erfindung aber die untere Heckklappe einer zweiteilig ausgebildeten Heckklappe zu verstehen.

Weitere vorteilhafte Ausgestaltungen sind in den Unteransprüchen sowie der nachfolgenden Detailbeschreibung der in den Unteransprüchen angegebenen Ausgestaltungen angeführt.

Nach einer ersten vorteilhaften Ausgestaltung der Erfindung kann das Rahmenelement u-förmig ausgebildet sein und einen sich quer zur Fahrzeuglängsrichtung erstreckenden Mittelabschnitt aufweisen, an dessen beiden Enden je ein winklig zu dem Mittelabschnitt angeordneter Endabschnitt vorgesehen ist. Der Mittelabschnitt stellt die Basis der U-Form bereit, während die Endabschnitte die Schenkel der U-Form ausbilden. Mit winkliger Anordnung kann in diesem Zusammenhang gemeint sein, dass die Endabschnitte jeweils senkrecht zu dem Mittelabschnitt angeordnet sind. Gleichermaßen kann aber auch ein von 90° abweichender Winkel zwischen den Endabschnitten und dem Mittelabschnitt vorliegen, solange eine winklige Anordnung gewährleistet ist. Insbesondere kann der Winkel in einem Bereich von 70° bis 110° liegen. Die Endabschnitte und der Mittelabschnitt können als einstückiges Bauteil gefertigt werden und ein solches ausbilden, beispielsweise als Guß- oder Formteil. Das Rahmenelement kann dabei aus unterschiedlichen Materialien wie Stahl, Blech, hochfestem Kunststoff, Kompositwerkstoffen etc. gefertigt sein, solange es die technischen Erfordernisse an die Mindeststeifheit, Dämpfungseigenschaften und Crash-Stabilität erfüllt. Bezogen auf den Querschnitt kommen unterschiedlichste Formen für die Ausgestaltung des Mittelabschnitts und der Endabschnitte in Betracht, beispielsweise können die Abschnitte einen runden oder abgeflachten (z.B. rechteckigen) Querschnitt aufweisen. Auch kann der Mittelabschnitt eine von den Endabschnitten abweichende Querschnittsform aufweisen. Die Endabschnitte können an ihren oberen Enden, also an ihrem zu dem Mittelabschnitt abgewandten Ende zusätzlich einen Befestigungsflansch aufweisen, welcher vorzugsweise in einem Winkel von circa 90° an die jeweiligen Endabschnitte angeflanscht ist. An den Befestigungsflanschen (wie auch an dem Mittelabschnitt oder den Endabschnitten) können Öffnungen ausgebildet sein, über welche das Rahmenelement an dem heckseitigen Fahrzeugrahmen bzw. der Fahrzeugkarosserie befestigt werden kann.

Die u-förmige Ausbildung des Rahmenelements ermöglicht die Absenkung des aus dem Stand der Technik bekannten auf einem höheren Vertikalniveau (z.B. auf Höhe des Kofferraumbodens und nicht auf Höhe des Fahrzeugunterbodens) angeordneten unteren Rahmenelements. Je nach konkreter Ausbildung des Rahmenelements, können unterschiedliche Höhenniveaus des Rahmenelements (in Bezug auf die Vertikalhöhe) eingestellt werden. Über ein derart abgesenktes Rahmenelement können Gepäckstücke oder Transportgüter in einfacher Weise in den Kofferraum, bzw. in einen unter dem üblichen Kofferraumhöhenlevel liegenden Zwischenraum (zwischen Kofferraumboden und Fahrzeugunterboden) geladen werden.

Nach einer weiteren Ausgestaltung der vorliegenden Erfindung kann die Heckklappe dazu eingerichtet sein, um eine Schwenkachse abgeschwenkt zu werden, wobei die Schwenkachse quer zur Fahrzeuglängsrichtung verläuft und auf Höhe des Mittelabschnitts angeordnet ist. Die Angabe "auf Höhe des Mittelabschnitts" bezieht sich dabei auf das Vertikalniveau der Schwenkachse und des Mittelabschnitts. Ohne weiteres kann die Schwenkachse aber auch in einem leichten Höhenversatz zu dem Mittelabschnitt angeordnet werden. Auch die Schwenkachse kann Bestandteil der modularen Heckbaugruppe sein. Das dem heckseitigen Fahrzeugrahmen befestigbare Rahmenelement ist im montierten Zustand jedoch nicht abschwenkbar, sondern positionsfest angeordnet. Durch die im Wesentlichen höhengleiche Anordnung der Schwenkachse zu dem Mittelabschnitt des Rahmenelements, steht auch die Schwenkachse einem einfachen Be- und Entladevorgang über die heckseitige Fahrzeugöffnung nicht im Wege. Die Schwenkachse kann in Form einer sich entlang der Fahrzeugquerachse erstreckenden Schwenkstange ausgebildet sein, jedoch auch in Form von Schwenkstümpfen, die an der Fahrzeugkarosserie befestigt oder angeformt sind, und die in entsprechende Lageraufnahmen der Heckklappe eingreifen. Gleichermaßen können derartige Stümpfe aber auch an der Heckklappe ausgebildet sein und in Chassis-seitige Lageraufnahmen eingreifen. Auch alternative Ausgestaltungen zur Ausbildung von Schwenklagern können im Rahmen der Erfindung zum Einsatz kommen.

Die Tatsache, dass die im Rahmen der erfindungsgemäßen Heckbaugruppe zum Einsatz kommende Heckklappe beim Öffnen abgeschwenkt wird, erlaubt es einen anschließenden Schließvorgang der Heckkappe für einen Nutzer deutlich komfortabler auszuführen. Im Gegensatz zu aufschwenkbar ausgebildeten Heckklappen (die Schwenkachse befindet sich in diesem Fall am oberen Rahmenende, ausgenommen sind hier Stufenhecks), bei welchen zum Wiederverschließen weit nach oben (sogar über Kopf) gegriffen werden muss, erlaubt die erfindungsgemäße Ausgestaltung auch Personen mit geringerer Körpergröße ein einfaches Öffnen und Verschließen der Heckklappe. Sofern die erfindungsgemäße Heckklappe den unteren Teil einer zweiteiligen Heckklappe bereitstellt, kann das Fahrzeug bereits durch eine alleinige Öffnung der unteren Heckklappe beladen werden, d.h. es müssen nicht zwingend beide Heckklappenteile zum Be- und Entladen geöffnet werden.

Nach einer weiteren Ausgestaltung der vorliegenden Erfindung kann die modulare Heckbaugruppe weiterhin zumindest einen der folgenden Bestandteile umfassen: eine Stoßstange, einen Verkleidungskörper, eine Dichtungsanordnung, zumindest ein Leuchtmittel, ein Sensorelement (beispielsweise einen Abstandssensor) und einen Verriegelungsmechanismus zur Verriegelung der Heckklappe an dem Kraftfahrzeug. Die Stoßstange kann dabei jedoch bereits von dem Rahmenelement ausgebildet sein, sodass nicht zwingend eine zusätzliche Stoßstange in die Heckbaugruppe integriert sein muss. In diesem Zusammenhang sei betont, dass im Rahmen der vorliegenden Erfindung auch die gesamte Baugruppe als Stoßstange, d.h. als im Crashfall Energie absorbierendes Bauelement angesehen werden kann. Unter einem Verkleidungskörper ist die Außenverkleidung des Fahrzeugs zu verstehen, die die weiteren Komponenten der Baugruppe von außen umgibt. Der Verkleidungskörper kann mehrere Bestandteile umfassen oder einteilig gefertigt sein. Er kann dabei insbesondere aus Metall und/oder Kunststoff gefertigt sein. Unter einer Dichtungsanordnung sind in diesem Zusammenhang sämtliche Dichtungen zu verstehen, die zwischen den Bestandteilen der modularen Heckbaugruppe untereinander vorgesehen sind, sowie jene Dichtungen, die zwischen den Komponenten der Heckbaugruppe und dem Fahrzeugrahmen bzw. weiteren Komponenten des Fahrzeugs vorgesehen sind. Dichtungen sind Bauelemente, mit welchen Öffnungen oder Spaltöffnungen zwischen mehreren Komponenten feuchtigkeitsdicht, luftdicht und/oder geräuschdicht verschlossen werden können. Selbstverständlich können solche Dichtungen aber lediglich feuchtigkeitsdicht und gleichzeitiger aber permeabel für Luft oder Gase ausgebildet sein. In der Regel lassen sich Öffnungen mit Dichtungen nicht vollständig geräuschdicht verschließen, vornehmlich geht es dabei um eine geräuschmindernde Abdichtung. Dichtungen können also thermisch- und schallisolierend ausgebildet sein. Wie bereits erwähnt, kann die Heckbaugruppe Leuchtmittel umfassen (beispielsweise eine Rückleuchte, Blinker etc.). Weiterhin kann die modulare Heckbaugruppe die zur Energieversorgung der Leuchtmittel benötigten elektrischen Leitungen bzw. Kontakte aufweisen. Auch können in die Heckbaugruppe verschiedenste Typen von Sensorelementen integriert sein, beispielsweise Abstandssensoren. Auch Geschwindigkeitssensoren oder Beschleunigungssensoren kommen als Sensorelemente in Betracht. Ebenso kann eine Kameraeinheit (z.B. eine Rückfahrkamera) in die Heckbaugruppe integriert sein. Die genannte Aufzählung ist nicht abschließend. Unter einem Verriegelungsmechanismus ist zu verstehen, dass in die Heckbaugruppe bzw. die Heckklappe geeignete Verriegelungselemente integriert sind, die eine Verriegelung der Heckbaugruppe bzw. Heckklappe an der Fahrzeugkarosserie bzw. einer oberen Heckklappe (bei einer zweigeteilten Heckklappe) ermöglicht.

Nach einer weiteren Ausgestaltung der Erfindung bildet die Heckbaugruppe eine sich aus mehreren Modulen zusammensetzende Baugruppe aus. Mögliche der Heckbaugruppe zuzuordnende Module bzw. Bauteile wurden bereits vorangehend ausführlich beschrieben. An dieser Stelle sei jedoch betont, dass die einzelnen Module bzw. Bauteile jeweils Befestigungselemente oder Befestigungsbereiche aufweisen können, über welche sie mit weiteren Modulen bzw. Bauteilen verbunden werden können. Die Befestigungselemente bzw. Befestigungsbereiche können danach ausgewählt oder gestaltet sein, dass die Module modulweise demontiert oder montiert werden können. Somit ist im Falle eines Bauteildefekts ein einfacher Austausch ermöglicht.

Nach einer weiteren vorteilhaften Ausgestaltung der Erfindung bildet die Heckklappe in ihrer ausgeschwenkten Stellung eine Rampe aus. Die Rampe bildet im Sinne einer Laderampe eine Verbindung zwischen dem Fahrzeuginneren (im Heckbereich) und einem Fahrbahnuntergrund aus. Über die Rampe können Ladegüter in einfacher Weise in den Stauraum bzw. heckseitigen Kofferraum bewegt und geladen werden. Die Rampe kann sich aus zumindest zwei teleskopartig zueinander verschiebbaren Rampenelementen zusammensetzen, die gemeinsam einen Teil der Heckklappe ausbilden oder in diese integriert sind.

Aufgrund der teleskopartigen Ausbildung kann die Rampe platzsparend in der Heckklappe verstaut bzw. untergebracht werden. Außerdem ist die Länge der Rampe nicht auf die Größe der Heckklappe beschränkt, wodurch eine gewünschte Neigung der Rampe im ausgeklappten Zustand flexibel eingestellt werden kann. Zur Gewährleistung der teleskopartigen Ausbildung, kann eines der Rampenelemente beispielsweise einen inneren Hohlraum aufweisen, in welchen ein zweites Rampenelement aufgenommen werden kann. Das zweite Rampenelement muss dabei eine entsprechend kleinere Dimensionierung aufweisen. Alternativ kann auch die Heckklappe einen inneren Hohlraum aufweisen, in welchem zumindest ein Rampenelement im nicht ausgefahrenen Zustand verstaut werden kann. Das Rampenelement kann im Wege einer teleskopartigen Verschiebebewegung gegenüber der Heckklappe ausgefahren werden. Die Rampenelemente können Verriegelungselemente aufweisen, um ein ungewolltes Verschieben der Rampenelemente zu vermeiden.

Nach einer weiteren vorteilhaften Ausgestaltung der Erfindung kann die Rampe eine Vorrichtung zum erleichterten Verladen von Lasten umfassen. Vorrichtungen zum erleichterten Verladen können beispielsweise auf der Rampe ausgebildete Führungselemente sein. Unter einem Führungselement kann beispielsweise eine Schienenanordnung zu verstehen sein, über die rollenbasierte Lasten be- oder entladen werden können. Unter einer Last kann in diesem Zusammenhang jegliches beliebige Transportgut oder Transportbehältnis zu verstehen sein, beispielsweise Koffer, Rollcontainer oder Transportboxen (diese Auflistung ist nicht abschließend). Gleichsam können unter einer Last aber auch Schubladen oder Schubladensysteme zu verstehen sein. Diese können beispielsweise schienen- oder rollenbasiert ausgeführt sein.

Wie bereits eingangs erwähnt, ist die vorliegende Erfindung zudem auf ein Kraftfahrzeug mit einer erfindungsgemäßen modularen Heckbaugruppe gerichtet. Grundsätzlich umfasst ein solches Kraftfahrzeug eine Fahrzeugkarosserie, die dahingehend ausgebildet ist, dass im Bereich eines heckseitigen Fahrzeugkofferraums eine Ladewanne angeordnet ist. Vorzugsweise ist die Ladewanne unterhalb einer Bodenfläche des Fahrzeugkofferraums angeordnet. Die Ladewanne weist hierbei einen Ladewannenboden auf, der - bis auf eine dem Fahrzeugheck zugewandte Wannenseite - vollständig von einer Wandung zum Fahrzeug abgegrenzt wird. Heckseitig, schließt der Ladewannenboden bündig mit dem Mittelabschnitt des Rahmenelements ab, liegt also auf einem nahezu gleichen Vertikalniveau. Die Ladewanne kann dabei in den Boden der Fahrzeugkarosserie integriert sein oder einen Teil der Fahrzeugkarosserie bereitstellen. Durch eine derartige Ausgestaltung wird das Kofferraumvolumen des Fahrzeugs wesentlich erhöht und Verladevorgänge vereinfacht.

Nach einer weiteren vorteilhaften Ausgestaltung der Erfindung kann die Ladewanne lösbar an der Fahrzeugkarosserie befestigt sein. Dazu können im oberen Bereich der Wanne abgewinkelt zu einer Seitenwandung der Ladewanne abgewinkelte Befestigungsflansche vorgesehen sein, über welche die Ladewanne an fahrzeugseitig vorgesehenen Befestigungsbereichen montiert werden kann. Die Befestigungsflansche können Befestigungsöffnungen oder Befestigungsmittel aufweisen, die mit zugehörigen fahrzeugseitigen Befestigungsöffnungen oder Befestigungsmitteln zusammenwirken und eine Befestigung der Ladewanne am Fahrzeug bereitstellen können. Beispielsweise kann die Ladewanne an dem Fahrzeug verschraubt werden. Durch die lösbare Befestigung der Ladewanne, kann diese bei Bedarf ausgetauscht werden. Grundsätzlich ermöglichen lösbare Befestigungen deutlich kostengünstigere und schnellere Reparaturen bzw. einen zügigen Austausch. Die Ladewanne kann grundsätzlich aus Kunststoff, Metall oder Verbundmaterialien gefertigt sein.

Nach einer weiteren vorteilhaften Ausgestaltung der Erfindung kann vorgesehen sein, dass zumindest ein zu der Grundform des Rahmenelements baugleiches Umspannelement unterhalb der Ladewanne angeordnet ist und mit seinen Endabschnitten an der Fahrzeugkarosserie befestigt ist. Ein solches Umspannelement kann den Halt der Ladewanne und somit die Befestigung der Ladewanne an der Fahrzeugkarosserie verstärken. Im Crashfall kann auch über das Umspannelement zusätzlich Energie aufgenommen und abgeleitet werden, sodass auch das Umspannelement energieabsorbierende Aufgaben im Bereich des Fahrzeughecks übernehmen kann. Das Umspannelement erlaubt auch schwerere Lasten in der Ladewanne zu transportieren. Erfindungsgemäß können auch mehrere Umspannelemente zum Halten bzw. Befestigen der Ladewanne vorgesehen sein. Wie schon angedeutet umspannt das Umspannelement die Ladewanne auf ihrer Unterseite. Weiterhin kann das Umspannelement auch einen Teil eines an den Ladewannenboden angrenzenden Ladewannenwandbereichs umspannen. Das Umspannelement liegt dabei vorzugsweise unmittelbar an der Ladewanne an. Insbesondere liegt das Umspannelement mit seinem sich quer zur Fahrzeuglängsrichtung erstreckenden Mittelabschnitt an einer einem Fahr- oder Standuntergrund zugewandten Unterseite der Ladewanne an.

Weitere Vorteile, Ausgestaltungen und Weiterbildungen, die im Zusammenhang mit der erfindungsgemäßen modularen Heckbaugruppe bzw. dem erfindungsgemäßen Kraftfahrzeug stehen, sind anhand der nachfolgend beschriebenen Ausführungsbeispiele genauer erläutert. Diese sollen dem Fachmann die Erfindung verdeutlichen und ihn die Lage versetzen, die Erfindung auszuführen, ohne jedoch die Erfindung zu beschränken. Die anhand der Ausführungsbeispiele beschriebenen Merkmale können ebenfalls zur Weiterbildung der erfindungsgemäßen modularen Heckbaugruppe wie auch dem erfindungsgemäßen Kraftfahrzeug herangezogen werden. Die Ausführungsbeispiele werden anhand der Figuren näher erläutert. Dort zeigt:
- Fig. 1: eine schematische Darstellung eines typischen aus dem Stand der Technik bekannten Fahrzeughecks samt Heckrahmen in einer Hinteransicht,
- Fig. 2: eine schematische Darstellung eines Fahrzeughecks gemäß der vorliegenden Erfindung,
- Fig. 3: eine Explosionsdarstellung eines Fahrzeughecks sowie der modularen Heckbaugruppe gemäß der vorliegenden Erfindung,
- Fig. 4: eine perspektivische Darstellung eines Fahrzeughecks mit einer teilweise abgeschwenkten Heckbaugruppe gemäß der vorliegenden Erfindung,
- Fig. 5: eine schematische Darstellung der Funktionsweise einer seitens der erfindungsgemäßen modularen Heckbaugruppe im abgeschwenkten Zustand bereitgestellten Rampe.

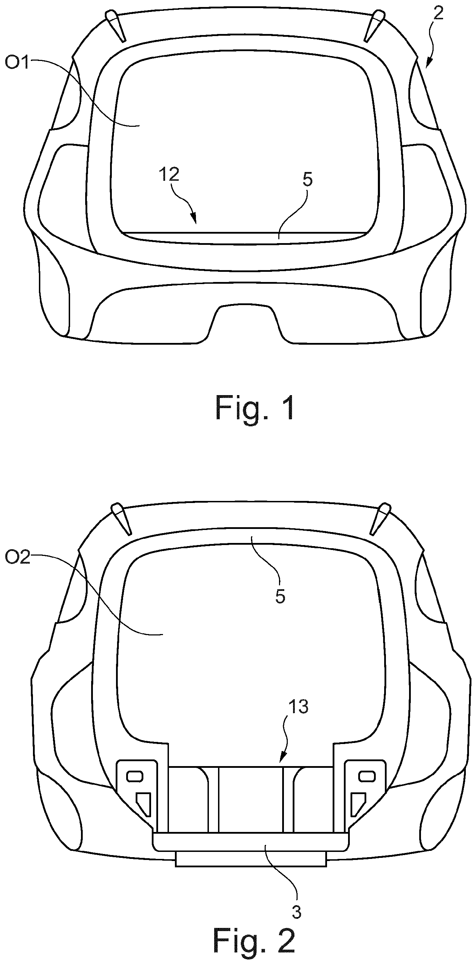

In der Figur 1 ist ein Fahrzeugheck eines aus dem Stand der Technik allgemein bekannten Kraftfahrzeugs 2 in einer Aufsicht auf den Heckbereich wiedergegeben. In der Regel weisen Kraftfahrzeuge 2 im Heckbereich eine Ladeöffnung O1 auf, welche von einem starren heckseitigen Fahrzeugrahmen 5 begrenzt ist. Der Fahrzeugrahmen 5 ist dabei Teil der Fahrzeugkarosserie und in der Regel ein einteiliges Bauteil. Die Ladeöffnung O1 kann von einer (nicht dargestellten) Heckklappe verschlossen werden. Bekannt ist es dabei, einteilige oder zweiteilige Heckklappen zu verwenden, wobei die Heckklappen in der Regel an dem Fahrzeugrahmen 5 schwenkbar gelagert sind.

Die Figur 2 illustriert (in der gleichen Perspektive wie die Figur 1) einen wesentlichen Vorteil der vorliegenden Erfindung. Wie bereits im Rahmen der einleitenden Beschreibung und im Rahmen der Erläuterung der vorteilhaften Ausgestaltungen der Erfindung erwähnt, umfasst die erfindungsgemäße modulare Heckbaugruppe 1 ein heckseitiges Rahmenelement 3, welches einen Teil des heckseitigen Fahrzeugrahmens 5 ausbildet und lösbar an dem Fahrzeugrahmen 5 befestigt werden kann. Dies geht unmittelbar aus einem Vergleich der Figuren 1 und 2 hervor. Im Vergleich zu dem in Figur 1 wiedergegebenen Kraftfahrzeug 2, ist der untere Teil des Rahmens 5 bei dem in Figur 2 dargestellten Kraftfahrzeug 2 auf ein niedrigeres vertikales Höhenniveau herabgesetzt.

In Bezug zum Stand der Technik, ist der einteilige, heckseitige Fahrzeugrahmen 5 mit der Erfindung dahingehend abgeändert worden, dass die untere Rahmenseite durch ein separates Rahmenelement 3 ersetzt wird, welches über geeignete Verbindungselemente (beispielsweise Schrauben 11) mit dem heckseitigen Fahrzeugrahmen 5 verbunden werden kann.

Dadurch wird eine einfachere Zugänglichkeit eines in Bezug auf das Vertikalniveau unterhalb des Kofferraumbodens 12 (eines klassischen Fahrzeugs) liegenden Zwischenraums 13 beim Be- oder Entladen ermöglicht. Die aus dem Stand der Technik bekannte, untere Seite des heckseitigen Fahrzeugrahmens 5 ist im Rahmen der vorliegenden Erfindung also abgesenkt. Durch die lösbare Verbindbarkeit des unteren Rahmenelements 3 mit dem heckseitigen Fahrzeugrahmen 5 wird ferner ein Austausch des Rahmenelements 3 im Falle einer Beschädigung (beispielsweise in Folge eines Crashs) erleichtert. Auch wird die Ladeöffnung O2 durch die vorliegende Erfindung im Vergleich zu einem bekannten Kraftfahrzeug des gleichen Typs (vgl. Figur 1) vergrößert.

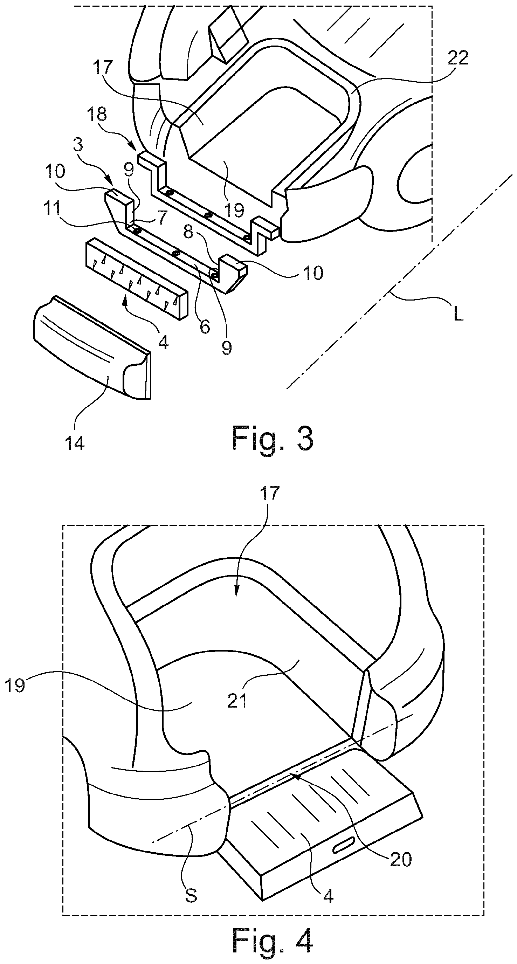

Wie beispielsweise in den Figuren 2 und 3 dargestellt, ist das Rahmenelement 3 u-förmig ausgebildet. Dabei weist es einen sich quer zur Fahrzeuglängsrichtung L erstreckenden Mittelabschnitt 6 auf, an dessen beiden Enden 7, 8 je ein winklig zu dem Mittelabschnitt 6 angeordneter Endabschnitt 9 vorgesehen ist. Der Mittelabschnitt 6 stellt die Basis der U-Form bereit, während die Endabschnitte 9 die Schenkel der U-Form ausbilden. Gemäß der vorliegenden figürlichen Darstellung sind die Endabschnitte 9 gewinkelt (beispielsweise senkrecht) zu dem Mittelabschnitt 6 angeordnet. Die Endabschnitte 9 weisen an ihren oberen Enden, also an ihren zu dem Mittelabschnitt 6 abgewandten Enden zusätzlich Befestigungsflansche 10 auf, welche - wie vorliegend dargestellt - beispielsweise in einem Winkel von 90° an die Endabschnitte 9 angeflanscht sind. Die Befestigungsflansche 10 (wie auch der Mittelabschnitt 6 oder die Endabschnitte 9) können Öffnungen aufweisen, über welche das Rahmenelement 3 an dem heckseitigen Fahrzeugrahmen 5 bzw. der Fahrzeugkarosserie befestigt werden kann. Die Befestigung kann z. B. über Schrauben 11 erfolgen. Wie die Figur 3 ebenfalls zu erkennen gibt, weist die modulare Heckbaugruppe 1 zudem einen Verkleidungskörper 14 auf, der die Heckbaugruppe 1 zumindest teilweise von außen umgibt.

Weiterhin gibt die Figur 3, jedoch auch die Figur 4 zu erkennen, dass das erfindungsgemäße Kraftfahrzeug 2 im Bereich des heckseitigen Fahrzeugkofferraums eine Ladewanne 17 aufweist. Die Ladewanne 17 ist dabei lösbar an der Fahrzeugkarosserie befestigt. Im montierten Zustand kann ein zu der Grundform des Rahmenelements 3 baugleiches Umspannelement 18 unterhalb der Ladewanne 17 angeordnet sein und mit seinen Endabschnitten 9 an der Fahrzeugkarosserie befestigt sein. Insbesondere kann das Umspannelement 18 mit seinem sich quer zur Fahrzeuglängsrichtung L erstreckenden Mittelabschnitt 6 an einer einem Fahr- oder Standuntergrund zugewandten Unterseite der Ladewanne 17 anliegen.

Bezüglich der Ladewanne 17 sei erwähnt (siehe auch Figur 3 und 4), dass diese einen Ladewannenboden 19 aufweist, der - bis auf eine dem Fahrzeugheck zugewandte Wannenseite 20 - vollständig von einer Wandung 21 zum Fahrzeug abgegrenzt wird. Heckseitig, schließt der Ladewannenboden 19 bündig mit dem Mittelabschnitt 6 des Rahmenelements 3 ab, liegt also auf einem nahezu gleichen Vertikalniveau (vgl. Fig. 3). Die Ladewanne 17 kann dabei in den Boden der Fahrzeugkarosserie integriert sein oder einen Teil der Fahrzeugkarosserie bereitstellen. Durch eine derartige Ausgestaltung wird das Kofferraumvolumen des Fahrzeugs wesentlich erhöht und Verladevorgänge vereinfacht.

Wie die Figuren 3 und 4 in ihrer Zusammenschau weiterhin zu erkennen geben, können im oberen Bereich der Ladewanne 17, abgewinkelt zu der Seitenwandung 21 der Ladewanne 17, abgewinkelte Befestigungsflansche 22 vorgesehen sein, über welche die Ladewanne 17 an fahrzeugseitig vorgesehenen Befestigungsbereichen montiert werden kann. Die Befestigungsflansche 22 können als durchgängiger Befestigungsflansch 22 ausgebildet sein. Weiterhin können die Befestigungsflansche 22 Befestigungsöffnungen oder Befestigungsmittel aufweisen, die mit zugehörigen fahrzeugseitigen Befestigungsöffnungen oder Befestigungsmitteln zusammenwirken und eine Befestigung der Ladewanne 17 am Fahrzeug bereitstellen können. Beispielsweise kann die Ladewanne 17 an dem Fahrzeug verschraubt werden, was grundsätzlich auch durch Schraubverbindungen im Ladewannenbodden 19 vollzogen werden kann. Auch kann der Ladewannenboden 19 mit dem Umspannelement 18 und dem Rahmenelement 3 verschraubt sein. Durch die lösbare Befestigung der Ladewanne 17, kann diese bei Bedarf ausgetauscht werden.

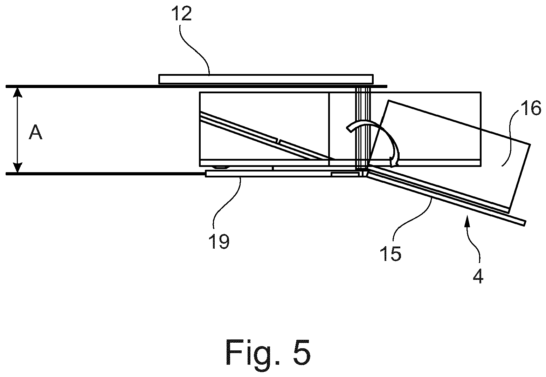

In der Figur 4 ist die Heckklappe 4 in einer teilweise abgeschwenkten Stellung wiedergegeben. Der Schwenkvorgang erfolgt dabei um eine Schwenkachse S. Wie aus der Figur 5 hervorgeht, kann die Heckklappe 4 noch weiter als in der Figur 4 illustriert abgeschwenkt werden.

Wie in der Figur 5 weiterhin dargestellt, bildet die Heckklappe 4 in ihrer ausgeschwenkten Stellung eine Rampe 15 aus. Die Rampe 15 bildet im Sinne einer Laderampe eine Verbindung zwischen dem Fahrzeuginneren (im Heckbereich) und einem Fahrbahnuntergrund aus. Über die Rampe 15 können Ladegüter bzw. Lasten 16 in einfacher Weise in den Stauraum bzw. heckseitigen Kofferraum bewegt und geladen werden. Die Rampe 15 kann sich aus zumindest zwei teleskopartig zueinander verschiebbaren Rampenelementen zusammensetzen, die gemeinsam einen Teil der Heckklappe 4 ausbilden oder in diese integriert sind. Über die Rampe 15 lassen sich Lasten 16 in besonders praktikabler Weise in die Ladewanne 17 laden. Gleiches gilt für Entladevorgänge. Die vorliegende Erfindung ermöglicht ein einfaches Be- und Entladen von unterhalb eines üblichen Kofferraumbodens 12 vorgesehenen Stauraums, welcher durch die Bereitstellung einer Ladewanne 17 und die erfindungsgemäße Heckbaugruppe 1 heckseitig zugänglich ist. Der so zugängliche Stauraumgewinn wird unter anderem durch den Abstand A zwischen dem Ladewannenboden 19 und dem Kofferraumboden 12 repräsentiert (vgl. Fig. 5).

### Bezugszeichenliste

- 1: Heckbaugruppe
- 2: Kraftfahrzeug
- 3: Rahmenelement
- 4: Heckklappe
- 5: Fahrzeugrahmen
- 6: Mittelabschnitt
- 7: Ende
- 8: Ende
- 9: Endabschnitt
- 10: Befestigungsflansch
- 11: Schraube
- 12: Kofferraum boden
- 13: Zwischenraum
- 14: Verkleidungskörper
- 15: Rampe
- 16: Last
- 17: Ladewanne
- 18: Umspannelement
- 19: Ladewannenboden
- 20: Wannenseite
- 21: Wandung
- 22: Befestigungsflansch

## Patentansprüche

1. Modulare Heckbaugruppe (1) für ein Kraftfahrzeug (2), umfassend ein heckseitiges Rahmenelement (3) und eine Heckklappe (4), wobei das Rahmenelement (3) dazu eingerichtet ist, einen Teil eines heckseitigen Fahrzeugrahmens (5) auszubilden und lösbar an dem Fahrzeugrahmen (5) befestigt zu werden, **dadurch gekennzeichnet, dass** die Heckklappe (4) dazu eingerichtet ist, im Wege einer kombinierten Translations- und Schwenkbewegung geöffnet zu werden, das heißt die Heckklappe (4) erfährt vor einem Abschwenken zunächst eine translatorische Schiebebewegung und erst dann eine Abschwenkbewegung.

2. Modulare Heckbaugruppe (1) nach Anspruch 1, **dadurch gekennzeichnet, dass** das Rahmenelement (3) u-förmig ausgebildet ist und einen sich quer zur Fahrzeuglängsrichtung (L) erstreckenden Mittelabschnitt (6) aufweist, an dessen beiden Enden (7, 8) je ein winklig zu dem Mittelabschnitt (6) angeordneter Endabschnitt (9) vorgesehen ist.

3. Modulare Heckbaugruppe (1) nach Anspruch 2, **dadurch gekennzeichnet, dass** die Endabschnitte (9) und der Mittelabschnitt (6) ein einteiliges Bauteil ausbilden.

4. Modulare Heckbaugruppe (1) nach Anspruch 2 oder 3, **dadurch gekennzeichnet, dass** die Heckklappe (4) dazu eingerichtet ist, um eine Schwenkachse (S) abgeschwenkt zu werden, wobei die Schwenkachse (S) quer zur Fahrzeuglängsrichtung (L) verläuft und auf Höhe des Mittelabschnitts (6) angeordnet ist.

5. Modulare Heckbaugruppe (1) nach einem der vorangegangenen Ansprüche, **dadurch gekennzeichnet, dass** die Heckbaugruppe (1) weiterhin zumindest einen der folgenden Bestandteile umfasst: eine Stoßstange, einen Verkleidungskörper (13), zumindest eine Dichtungsanordnung, ein Leuchtmittel, ein Sensorelement, beispielsweise einen Abstandssensor, und einen Verriegelungsmechanismus zur Verriegelung der Heckklappe (4) an dem Kraftfahrzeug (2).

6. Modulare Heckbaugruppe (1) nach einem der vorangegangenen Ansprüche, **dadurch gekennzeichnet, dass** die Heckbaugruppe (1) eine sich aus mehreren Modulen zusammensetzende Baugruppe ausbildet.

7. Modulare Heckbaugruppe (1) nach einem der vorangegangenen Ansprüche, **dadurch gekennzeichnet, dass** die Heckklappe (4) in ihrer ausgeschwenkten Stellung eine Rampe (15) ausbildet.

8. Modulare Heckbaugruppe nach Anspruch 7, **dadurch gekennzeichnet, dass** sich die Heckklappe (4) aus zumindest zwei teleskopartig zueinander verschiebbaren Rampenelementen zusammensetzt.

9. Modulare Heckbaugruppe nach Anspruch 7 oder 8, **dadurch gekennzeichnet, dass** die Rampe (15) eine Vorrichtung zum erleichterten Verladen von Lasten (16) umfasst.

10. Kraftfahrzeug (2) mit einer modularen Heckbaugruppe (1) nach einem der Ansprüche 1 bis 9, wobei das Kraftfahrzeug (2) eine Fahrzeugkarosserie aufweist, die dahingehend ausgebildet ist, dass im Bereich eines heckseitigen Fahrzeugkofferraums eine Ladewanne (17) angeordnet ist.

11. Kraftfahrzeug (2) nach Anspruch 10, **dadurch gekennzeichnet, dass** die Ladewanne (17) lösbar an der Fahrzeugkarosserie befestigt ist.

12. Kraftfahrzeug (2) nach Anspruch 10, **dadurch gekennzeichnet, dass** zumindest ein zu der Grundform des Rahmenelements (3) baugleiches Umspannelement (18) unterhalb der Ladewanne (17) angeordnet ist und mit seinen Endabschnitten (9) an der Fahrzeugkarosserie befestigt ist.

13. Kraftfahrzeug (2) nach Anspruch 12, **dadurch gekennzeichnet, dass** das Umspannelement (18) die Ladewanne (17) unterseitig zumindest teilweise umspannt.

14. Kraftfahrzeug (2) nach einem der Ansprüche 10 bis 13, **dadurch gekennzeichnet, dass** das Umspannelement (18) mit seinem sich quer zur Fahrzeuglängsrichtung (L) erstreckenden Mittelabschnitt (6) an einer einem Fahr- oder Standuntergrund zugewandten Unterseite der Ladewanne (17) anliegt.

## Claims

1. Modular rear assembly (1) for a motor vehicle (2), comprising a rear-side frame element (3) and a tailgate (4), wherein the frame element (3) is configured to form a part of a rear-side vehicle frame (5) and to be releasably fastened to the vehicle frame (5), **characterized in that** the tailgate (4) is configured to be opened by way of a combined translational and pivoting movement, that is to say the tailgate (4) is subjected, prior to being pivoted downwards, firstly to a translational sliding movement and only subsequently to a downward pivoting movement.

2. Modular rear assembly (1) according to Claim 1, **characterized in that** the frame element (3) is of U-shaped form and has a middle portion (6) which extends transversely to the vehicle longitudinal direction (L) and at the two ends (7, 8) of which there is provided in each case one end portion (9) which is arranged at an angle to the middle portion (6) .

3. Modular rear assembly (1) according to Claim 2, **characterized in that** the end portions (9) and the middle portion (6) form a one-part component.

4. Modular rear assembly (1) according to Claim 2 or 3, **characterized in that** the tailgate (4) is configured to be pivoted down about a pivot axis (S), wherein the pivot axis (S) extends transversely to the vehicle longitudinal direction (L) and is arranged at the height of the middle portion (6).

5. Modular rear assembly (1) according to one of the preceding claims, **characterized in that** the rear assembly (1) furthermore comprises at least one of the following constituent parts: a bumper, a trim body (13), at least one seal arrangement, an illumination means, a sensor element, for example a distance sensor, and a locking mechanism for locking the tailgate (4) on the motor vehicle (2).

6. Modular rear assembly (1) according to one of the preceding claims, **characterized in that** the rear assembly (1) forms an assembly made up of multiple modules.

7. Modular rear assembly (1) according to one of the preceding claims, **characterized in that** the tailgate (4) forms a ramp (15) in its pivoted-out position.

8. Modular rear assembly according to Claim 7, **characterized in that** the tailgate (4) is made up of at least two ramp elements which are displaceable telescopically with respect to one another.

9. Modular rear assembly according to Claim 7 or 8, **characterized in that** the ramp (15) comprises a device for facilitated loading of loads (16).

10. Motor vehicle (2) having a modular rear assembly (1) according to one of Claims 1 to 9, wherein the motor vehicle (2) has a vehicle body which is designed in such a way that a loading trough (17) is arranged in the region of a rear-side vehicle boot.

11. Motor vehicle (2) according to Claim 10, **characterized in that** the loading trough (17) is releasably fastened to the vehicle body.

12. Motor vehicle (2) according to Claim 10, **characterized in that** at least one spanning element (18) which is structurally identical to the basic form of the frame element (3) is arranged below the loading trough (17) and is fastened by way of its end portions (9) to the vehicle body.

13. Motor vehicle (2) according to Claim 12, **characterized in that** the spanning element (18) at least partially spans the loading trough (17) at the bottom side.

14. Motor vehicle (2) according to one of Claims 10 to 13, **characterized in that** the spanning element (18) bears with its middle portion (6), which extends transversely to the vehicle longitudinal direction (L), against a bottom side, facing towards a driving or standing ground surface, of the loading trough (17) .

## Revendications

1. Ensemble arrière modulaire (1) pour un véhicule automobile (2), comprenant un élément de châssis arrière (3) et un hayon (4), l'élément de châssis (3) étant adapté pour former une partie d'un châssis arrière (5) de véhicule et pour être fixé de manière amovible au châssis (5) de véhicule, **caractérisé en ce que** le hayon (4) est adapté pour être ouvert par un mouvement combiné de translation et de pivotement, c'est-à-dire que le hayon (4) subit d'abord un mouvement de translation et ensuite seulement un mouvement de pivotement avant d'être pivoté vers l'extérieur.

2. Ensemble arrière modulaire (1) selon la revendication 1, **caractérisé en ce que** l'élément de châssis (3) est réalisé en forme de U et présente une partie centrale (6) s'étendant transversalement à la direction longitudinale (L) du véhicule, à chacune des deux extrémités (7, 8) de laquelle est prévue une partie d'extrémité (9) disposée en angle par rapport à la section centrale (6).

3. Ensemble arrière modulaire (1) selon la revendication 2, **caractérisé en ce que** les parties d'extrémité (9) et la partie centrale (6) forment une pièce monobloc.

4. Ensemble arrière modulaire (1) selon la revendication 2 ou 3, **caractérisé en ce que** le hayon (4) est agencé pour être pivoté autour d'un axe de pivotement (S), l'axe de pivotement (S) étant transversal à la direction longitudinale (L) du véhicule et étant situé au niveau de la partie centrale (6).

5. Ensemble arrière modulaire (1) selon l'une quelconque des revendications précédentes, **caractérisé en ce que** l'ensemble arrière (1) comprend en outre au moins l'un des éléments suivants : un pare-chocs, un corps d'habillage (13), au moins un ensemble d'étanchéité, un moyen d'éclairage, un élément de détection, par exemple un capteur de distance, et un mécanisme de verrouillage pour verrouiller le hayon (4) sur le véhicule automobile (2).

6. Ensemble arrière modulaire (1) selon l'une des revendications précédentes, **caractérisé en ce que** l'ensemble arrière (1) forme un ensemble composé de plusieurs modules.

7. Ensemble arrière modulaire (1) selon l'une des revendications précédentes, **caractérisé en ce que** le hayon (4) forme une rampe (15) dans sa position pivotée vers l'extérieur.

8. Ensemble arrière modulaire selon la revendication 7, **caractérisé en ce que** le hayon arrière (4) se compose d'au moins deux éléments de rampe aptes à être déplacés de manière télescopique l'un par rapport à l'autre.

9. Ensemble arrière modulaire selon la revendication 7 ou 8, **caractérisé en ce que** la rampe (15) comprend un dispositif facilitant le chargement de charges (16).

10. Véhicule automobile (2) comportant un ensemble arrière modulaire (1) selon l'une des revendications 1 à 9, le véhicule automobile (2) comportant une carrosserie de véhicule configurée de manière à ce qu'un bac de chargement (17) soit disposé au niveau d'un coffre de véhicule situé à l'arrière.

11. Véhicule automobile (2) selon la revendication 10, **caractérisé en ce que** le bac de chargement (17) est fixé de manière amovible à la carrosserie du véhicule.

12. Véhicule automobile (2) selon la revendication 10, **caractérisé en ce qu'**au moins un élément de serrage (18) de construction identique à la forme de base de l'élément de châssis (3) est disposé en dessous du bac de chargement (17) et est fixé par ses parties d'extrémité (9) à la carrosserie du véhicule.

13. Véhicule automobile (2) selon la revendication 12, **caractérisé en ce que** l'élément de serrage (18) entoure au moins partiellement la face inférieure du bac de chargement (17).

14. Véhicule automobile (2) selon l'une des revendications 10 à 13, **caractérisé en ce que** l'élément de serrage (18) s'appuie par sa partie centrale (6) s'étendant transversalement à la direction longitudinale (L) du véhicule sur une face inférieure du bac de chargement (17) tournée vers un sol de roulement ou de stationnement.
